(19) Europäisches Patentamt
European Patent Office
Office européen des brevets

(11) Veröffentlichungsnummer : **0 058 668**
**B1**

(12) **EUROPÄISCHE PATENTSCHRIFT**

(45) Veröffentlichungstag der Patentschrift :
30.01.85

(21) Anmeldenummer : 81901308.7

(22) Anmeldetag : 28.04.81

(86) Internationale Anmeldenummer :
PCT/DE 81/00068

(87) Internationale Veröffentlichungsnummer :
WO/8103131 (12.11.81 Gazette 81/27)

(51) Int. Cl.[4] : **B 05 B 7/04**, B 29 B 7/06,
B 65 D 51/28, B 65 D 81/32

(54) DRUCKMITTELBETRIEBENE SPRÜHPISTOLE.

(30) Priorität : 29.04.80 DE 3016419

(43) Veröffentlichungstag der Anmeldung :
01.09.82 Patentblatt 82/35

(45) Bekanntmachung des Hinweises auf die Patenterteilung : 30.01.85 Patentblatt 85/05

(84) Benannte Vertragsstaaten :
FR

(56) Entgegenhaltungen :
DE-A- 2 412 743
DE-A- 2 625 175
DE-B- 1 014 889
DE-C-   212 979
US-A- 3 134 577

(73) Patentinhaber : IHMELS, Manfred
Lajestrasse 1a
D-2905 Edewecht (DE)

IHMELS, Hartmut
Hauptstrasse 23
D-2905 Edewecht (DE)

(72) Erfinder : IHMELS, Manfred
Lajestrasse 1a
D-2905 Edewecht (DE)
Erfinder : IHMELS, Hartmut
Hauptstrasse 23
D-2905 Edewecht (DE)

(74) Vertreter : Schumacher, Martin, Dipl-Ing.
Hauptstrasse 31
D-2808 Syke (DE)

**Beschreibung**

Die Erfindung bezieht sich auf eine druckmittelbetriebene Sprühpistole mit einem Vorratsbehälter für das Sprühmedium, einem Sprühkopf mit einer die Düse der Pistole im wesentlichen konzentrisch umschließenden Verteilerkammer mit Austrittsöffnungen für das Druckmedium, und mit einer Düsennadel, an der ein Pistolenabzug zum Öffnen der Düse gegen den Druck einer Schließfeder angreift, die in einem Gehäuseteil (Verschlußkappe) am Pistolenkörper gelagert ist, insbesondere zum Aufbringen von erhärtenden fließfähigen Stoffen auf Oberflächen.

Bei den Sprühpistolen der vorbezeichneten Art ist die Düse für das Sprühmittel in den Plstolenkörper mit seinem Sprühkopf integriert, und der Pistolenkörper ist mit einem Gewindestutzen zum Schraubauschluß mit dem Vorratsbehälter für das Sprühmedium versehen (z. B. DE-AS 1 047 079). Beim Verarbeiten von Kunststoff, der nach dem Aufsprühen schnell erhärten soll, wird kurz vor der Arbeit dem Sprühmedium noch ein Härtemittel beigegeben und eine intensive Mischung durchgeführt. Nach der Arbeit müssen Pistole und Vorratsbehälter gründlich gereinigt werden, um zu verhindern, daß sie durch erhärtende Reste des Mediums verschmutzen und verstopfen. Diese Arbeit ist umständlich und zeitraubend. Außerdem ergeben sich oftmals erhebliche Schwierigkeiten bei nicht sorgfältiger Reinigung der Sprühpistole.

Um im Wechsel nacheinander verschiedene Farbbehälter anschließen zu können, hat man auch schon Sprühpistolen entwickelt, deren Vorratsbehälter mit der Farbdüse sowohl als auch der Einrichtung zum Schließen und Öffnen — bis auf den Pistolenhebel — zu einer auswechselbaren Einheit mit Stecksitz am Pistolenkörper verbunden ist (DE 21 29 79). Diese Sprühpistolen haben sich dort bewährt, wo es darum geht, ohne viel Zeitverlust mehrfarbige Ornamente oder Bilder durch schnelles Auswechseln solcher Einheiten im Verlauf der Bildgestaltung erzeugen zu können. Wegen des Aufwandes für die Verschlußeinrichtung kommt diese Bauweise aber dort nicht in Betracht, wo es nur darum geht, bei Aufbrauch des Behälterinhaltes den Farbvorrat zu erneuern. Hierzu ist vielmehr die allgemein geübte Technik vorzuziehen, einen leeren Farbbehälter erneut mit dem bereitgehaltenen Sprühmedium zu füllen.

Das Problem der Verschmutzung und Reinigung ist weder hier noch dort gelöst.

Der Erfindung liegt die Aufgabe zugrunde, eine Sprühpistole zu schaffen, deren Gebrauch nicht durch zeitraubende Reinigungsarbeiten belastet wird.

Bei der Lösung dieser Aufgabe geht die Erfindung von der Überlegung aus, daß lediglich alle vom Sprühmedium benetzten Teile der Sprühpistole einem Austausch unterworfen und daß diese Teile so einfach und wohlfeil ausgeführt werden müßten, daß der Aufwand für ihren Ersatz geringer ist als der Aufwand für die Reinigung.

Ausgehend von dieser Überlegung ist erfindungsgemäß die Sprühpistole der eingangs bezeichneten Art so ausgebildet, daß die Düse mit der Düsennadel und dem Vorratsbehälter sowie einem beide verbindenden Steg einen auswechselbaren, in einen Stecksitz am Pistolenkörper einführbaren, und in der Arbeitsstellung durch die Verschlußkappe im Stecksitz gesichert gehaltenen Sprühmitteleinsatz bildet.

Nach Aufbrauch des Sprühmittels kann der Einsatz einfach herausgenommen und durch einen neuen Einsatz ersetzt werden, ohne zuvor eine Reinigung der Pistole vornehmen zu müssen.

Damit eine solche Gestaltung des austauschbaren Sprühmitteleinsatzes nicht mit nachteiligen Zwängen für die übrigen Teile der Pistole erkauft werden muß, sind Sprühmitteleinsatz und Stecksitz so gestaltet, daß die Düse mit ihrem Steg einen fußförmigen Körper mit Unterseite und fersenförmiger Rückseite bildet, dem ein pantoffelförmiger Stecksitz im Pistolenkörper zugeordnet ist. Damit ergibt sich der Vorteil, daß der Sprühmitteleinsatz mit seinem Fuß von oben her in den Pantoffelsitz schlüpfen kann, ohne wesentlichen Raum hinter dem Sitz zu beanspruchen, wo die Einrichtung zum Öffnen und Verschließen der Düse untergebracht ist. Düse, Vorratsbehälter und der sie verbindende Steg mit dem Verbindungskanal können aus einem Stück gefertigt werden, vorzugsweise aus Kunststoff.

Die Verschlußkappe könnte auch unverändert in der bei modernen Sprühpistolen gebräuchlichen Form beibehalten und überdies genutzt werden, um den Sprühmitteleinsatz fest in seinen Stecksitz zu drücken, indem sie mit ihrer Frontseite an der Rückseite des Einsatzes angreift. Für die Einführung des Fußes in den Pantoffelsitz kann man ein weites Spiel vorsehen und die letztlich präzise Ausrichtung einfachen Führungsmitteln zwischen Pantoffelsitz und Fuß übertragen.

Für Packungen von Sprühmitteln, denen vor dem Verbrauch ein Härtemittel zugesetzt wird, kann der Vorratsbehälter in für große, von der Pistole unabhängige Vorratsbehälter bekannter Art mit einer kleinen Kammer für das vor dem Gebrauch einzubringende Härtemittel versehen sein.

Die Abdichtung der Düsenkammer nach außen kann, da sie regelmäßig in nur einmaligem Einsatz beansprucht wird, durch einen mit der Düsennadel verbundenen Kolben erfolgen, der Art, daß die Düsennadel mit diesem Kolben nach hinten ausziehbar ist. Dadurch erübrigt sich der herkömmliche, baulich und betrieblich aufwendige Abschluß durch eine Stoffbüchse.

Um eine einwandfreie Mischung mit dem Härtemittel zu gewährleisten, ist es wichtig, den Vorratsbehälter zur Düsenkammer erst zu öffnen, nachdem das Härtemittel eingebracht worden ist. Erfindungsgemäß ist zu diesem Zweck der die Düsenkammer gegen die Düsennadel nach außen abdichtende Kolben so angeordnet, daß er in der Schließlage der Düse die Düsenkammer gegen den Verbindungskanal zum Vorratsbehälter abschließt.

In der Zeichnung ist die Erfindung an einem Ausführungsbeispiel veranschaulicht. Es zeigt

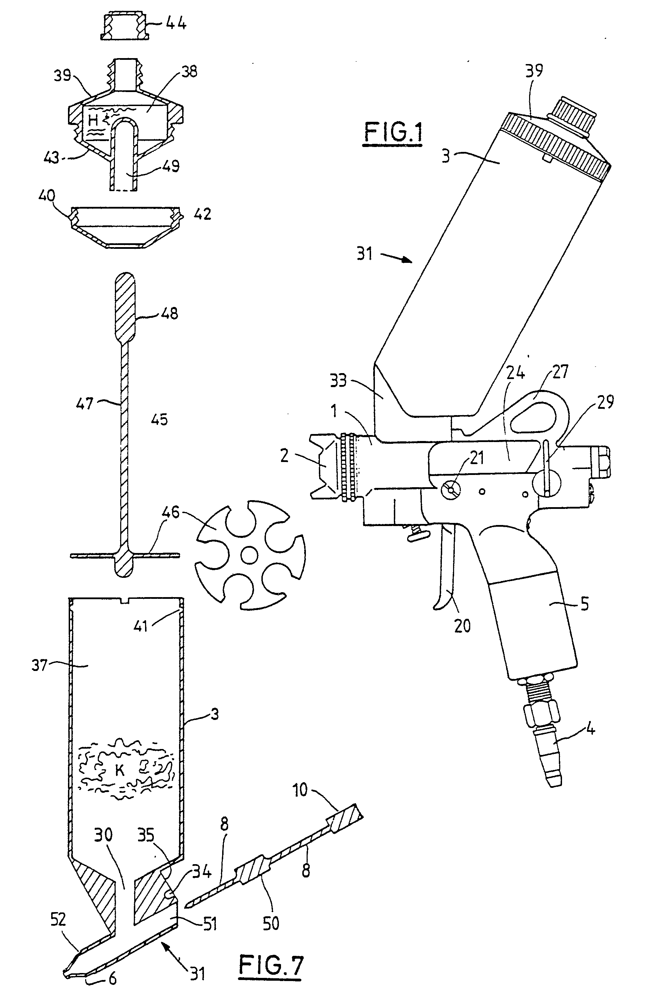

Figur 1   eine Sprühpistole nach der Erfindung in Seitenansicht,

Figur 2   einen Querschnitt durch den Sprühkopf der Pistole nach Fig. 1, in größerem Maßstab,

Figur 3   die Pistole nach Fig. 1, in explosed Darstellung,

Figur 4   eine Draufsicht auf die Pistole nach Fig. 1, ohne Sprühmitteleinsatz,

Figur 5   eine Draufsicht auf den Pistolenkörper in Fig. 3,

Figur 6   eine Draufsicht auf den Verschlußkörper in Fig. 3,

Figur 7   den Sprühmitteleinsatz, in exploded Darstellung, in größerem Maßstab, und

Figur 8   eine Ansicht in Pfeilrichtung VIII der Fig. 3, in größerem Maßstab.

Die in der Zeichnung dargestellte Sprühpistole dient zum Aufbringen von erhärtenden fließfähigen Stoffen (Sprühmedien), insbesondere eines Gemisches aus Kunststoff und einem Kunststoffhärtemittel auf Oberflächen mittels einer Düse 6, die mit einem Vorratsbehälter 3 für das Sprühmedium verbunden ist. Sie besteht im wesentlichen aus einem Pistolenkörper 1 mit einem Sprühkopf 2, der an den Vorratsbehälter 3 für das Sprühmedium und über eine Zuleitung 4 am Heft 5 des Pistolenkörpers an eine Druckluftquelle anschließbar ist.

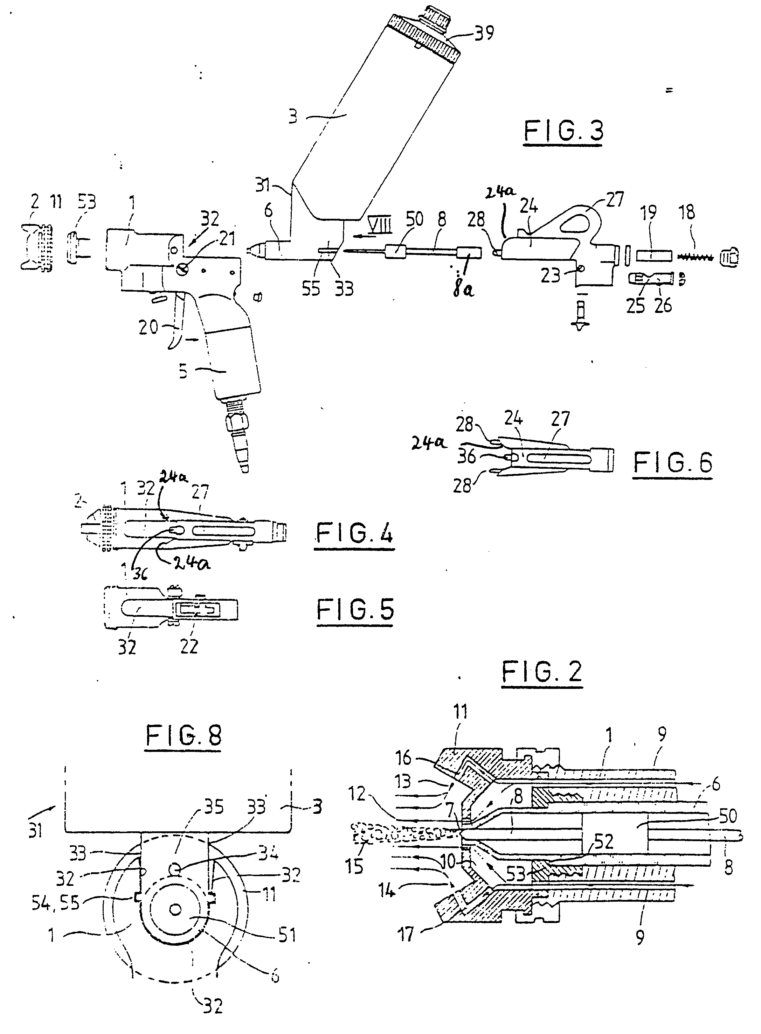

Der Sprühkopf 2 — vgl. insbesondere Fig. 2 — enthält eine Düse 6, deren Austrittsöffnung 7 im Ruhezustand durch die Spitze einer Düsennadel 8 zugehalten und durch Zurückziehen der Nadel geöffnet wird. Zur Zuleitung der Druckluft sind in dem Pistolenkörper 1 Kanäle 9 vorgesehen, die in eine das vordere Ende der Düse 6 umschließende Verteilerkammer 10 des Sprühkopfes 2 einmünden. Diese Verteilerkammer wird gebildet durch die Frontseite des Pistolenkörpers und eine Schraubkappe 11 mit einer zentralen Bohrung, die mit dem Düsenende eine ringförmige Öffnung zur Erzeugung eines konzentrischen Zerstäuberstrahles 12 für das Sprühmittel bildet. Der dadurch erzeugte Rundstrahl kann durch von zwei Seiten geneigt gegeneinander gerichtete Hilfsstrahlen 13, 14 zu einem Flachstrahl 15 mit mehr oder weniger großer Ausdehnung in einer zur Zeichenebene senkrechten Ebene mit einstellbarer Neigung zur Symmetrieebene umgeformt werden. Hierzu ist die Schraubkappe mit von zwei Seiten gegen den Rundstrahl gerichteten Hilfskanälen 16, 17 versehen. Eine Schließfeder 18 drückt über einen Bolzen 19 auf den Nadelkopf 8a. Durch Verschwenken eines Hebels als Pistolenabzug 20 in Pfeilrichtung um eine Achse 21 und Verschwenken einer mit ihm gekoppelten, an der Rückseite des Nadelkopfes 8a angreifenden Mitnehmergabel 22 kann die Düsennadel 8 gegen die Feder 18 zurückgezogen und dadurch die Düsenaustrittsöffnung 7 der Sprühdüse freigegeben werden.

Mit Betätigung des Pistolenabzuges 20 wird auch ein Nadelventil im Verbindungskanal von der Zuleitung 4 zum Sprühkopf 2 geöffnet, und zwar vorzugsweise mit einer gewissen Voreilung, so daß der Druckluftstrom bereits einsetzt, bevor sich die Srpühdüse öffnet.

Schließfeder 18 und Bolzen 19 sind in einem herkömmlichen, als Verschlußkappe 24 bezeichneten Gehäuseteil der Pistole angeordnet. Nach Lösen einer Verriegelung mit Spannhebel 29 ist die mit einer Handhabe 27 versehene Verschlußkappe 24 auf einer Stange 25 vom vorderen Gehäuseteil bzw. Pistolenkörper 1 mit Anschlagbegrenzung abziehbar. Nach dem Abziehen kann die Verschlußkappe auch um die Stange 25 gedreht und um ein Gelenk 26 der Stange 25 nach hinten abgeklappt werden. Die Düsennadel könnte, wie herkömmlich, nach dem Rückziehen und Abklappen der Verschlußkappe 24 nach hinten aus der Düse herausgezogen werden. (Beim Anmeldungsgegenstand wird hiervon, wie weiter unten beschrieben wird, kein Gebrauch gemacht). In der Arbeitsstellung wird die Verschlußkappe 24 durch Betätigung des Spannhebels 29 mit ihrer Frontseite 24 a gegen die Rückseite des Pistolenkörpers gerückt und in ordnungsgemäßer Schließlage gesichert. Zur weiteren Sicherung ist an der Frontseite 24a auch noch ein Stift 36 vorgesehen, der in eine Bohrung 34 eingreift.

Insoweit entspricht die Konstruktion derjenigen herkömmlicher Spritzpistolen.

Abweichend hiervon ist die Gesamtheit der das Sprühmittel umschließenden und führenden Teile der Pistole, bestehend aus dem Vorratsbehälter 3, der Düse 6 einschließlich Düsennadel 8 und einem Steg 33 mit Verbindungskanal 30 zwischen Vorratsbehälter 3 und Düse 6 leicht auswechselbar als einheitlicher Hüllkörper bzw. Sptühmitteleinsatz 31 ausgebildet.

Zur Aufnahme des Sprühmitteleinsatzes 31 ist der Pistolenkörper 1 mit einem schlupfschuhförmigen Stecksitz 32 — im folgenden auch Pantoffelsitz genannt — versehen. Der Steg 33 bildet zusammen mit der Düse 6 einen in den Pantoffelsitz 32 einführbaren Fuß 6/33 mit seiner Unterseite als Fußsohle und der Rückseite als Ferse 35. Die schon oben genannte, auch bei herkömmlichen Sprühpistolen bereits vorgesehene Bohrung 34 zur Aufnahme des auch an herkömmlichen Verschlußkappen vorgesehenen Stiftes 36 ist hier nicht in dem Pistolenkörper, sondern in der Ferse 35 des Sprühmitteleinsatzes angebracht. Zur weiteren Sicherung des Sprühmitteleinsatzes kann eine Steckverbindung mit Steckstiften 28 an der Frontseite 24a der Verschlußkappe 24, die in Löcher des Pistolenkörpers 1 eingreifen, vorgesehen sein. Will man die Verschlußkappe 24 herkömmlicher Spritzpistolen unverändert verwenden, sind lediglich die beiden Steckstifte 28 wegzulassen ; man kann sie durch geeignete Gestaltung von Fuß 6/33 und Pantoffelsitz 32 ersetzen, z. B. wie in Fig. 8 dargestellt, durch einen Eingriff 44/55 in Form einer Nut-Feder-Kupplung beider Teile. Die Düsennadel 8 ist fest in der Verschlußstellung, aber zurückziehbar bei Ingebrauchnahme, eingesetzt. Nachdem die Füllung des Behälters aufgebraucht worden ist, wird der ganze Sprühmitteleinsatz 31 weggeworfen, gegebenenfalls auch an den Farblieferanten zum Reinigen, Füllen und Wiederverwenden zurückgegeben.

Düse 6, Vorratsbehälter 3 und Steg 33 sind in einem Stück hergestellt. Der Behälter enthält eine große Kammer 37 für den Kunststoff K und eine kleine Kammer 38 für das vor Gebrauch in den Kunststoff einzubringende Härtemittel H. Diese kleine Kammer ist im Deckel 39 untergebracht, der seinerseits aus drei Teilen, einem als Trichter 42 zum Einfüllen des Härtemittels H ausgebildeten Deckelunterteil, das mit einem Schließwulst 40 in eine Rast 41 eingreift, einem mittleren, die kleine Kammer 38 enthaltenden flaschenförmigen Deckelteil 43, der dichtend in den Deckelunterteil einschraubbar ist, und einem als Verschlußkappe für die kleine Kammer dienenden Deckeloberteil 44, besteht.

Der Behälter enthält ferner einen Mischer 45 für Kunststoff K und Härtemittel H, bestehend aus einer Lochscheibe 46 mit Schaft 47 und Griff 48, der durch die Trichteröffnung des Deckelunterteiles in eine Scheide 49 am mittleren Deckelteil eingreift, während das untere Ende des Schaftes 47 vor der Ingebrauchnahme, wie aus Fig. 7 ersichtlich ist, den Verbindungskanal 30 zur Düse abschließt.

Die Düsennadel ist mit einem Kolben 50 versehen, der in der Ruhelage den Verbindungskanal 30 zwischen Vorratsbehälter 3 und Düse 6 verschließt und in zurückgezogener Arbeitsstellung die für die Düsennadel vorgesehene Durchtrittsöffnung 51 nach außen verschlossen hält. Die Düse 6 ist außen mit einem frontalen Bund 52 versehen, mit dem sie gegen einen in den Pistolenkörper 1 einschraubbaren Anschlag 53 des Pantoffelsitzes 32 stößt, wenn sie durch die Frontseite 24a der Verschlußkappe 24 und die über die Verschlußkappe 24 am Pistolenkörper 1 sich abstützende Schließfeder 18 in den Sitz gedrückt wird.

Nach Lösen des Spannhebels 29 kann die Verschlußkappe 24 auf der Stange 25 bis zu ihrem Anschlag zurückgezogen werden und gibt damit den Sprühmitteleinsatz 32 zum Heraus nehmen und Austausch frei.

Im Rahmen der Erfindung sind noch mancherlei Abänderungen und andere Ausführungen möglich. Der Flachstrahl 15 z. B. kann bei geteilter Ausführung der Schraubkappe 11 verstellt werden, so daß er eine beliebige Neigung zur Zeichenebene einnehmen kann.

Bezugszeichenliste

| | |
|---|---|
| 1 | Pistolenkörper |
| 2 | Sprühkopf |
| 3 | Vorratsbehälter |
| 4 | Zuleitung |
| 5 | Heft |
| 6 | Düse |
| 7 | Austrittsöffnung von 6 |
| 8 | Düsennadel |
| 8a | Nadelkopf |
| 9 | Kanäle |
| 10 | Verteilerkammer |
| 11 | Schraubkappe |
| 12 | Zerstäuberstrahl |
| 13, 14 | Hilfsstrahlen |
| 15 | Flachstrahl |
| 16, 17 | Hilfskanäle |
| 18 | Schließfeder |
| 19 | Bolzen |
| 20 | Pistolenabzug |
| 21 | Achse von 20 |
| 22 | Mitnehmergabel |
| 23 | Achse |
| 24 | Verschlußkappe |
| 24a | Frontseite von 24 |
| 25 | Stange |
| 26 | Gelenk von 25 |
| 27 | Handhabe von 24 |
| 28 | Steckstifte an 24 |
| 29 | Spannhebel |
| 30 | Verbindungskanal zwischen 3 und 6 |
| 31 | Sprühmitteleinsatz |
| 32 | Stecksitz für 31 (Pantoffelsitz) |
| 33 | Steg mit 30 |
| 33/6 | Fuß |
| 34/36 | Eingriff zwischen 24 und 31 |
| 34 | Bohrung in 35 |
| 35 | Rückseite von 33/6 (Ferse) |
| 36 | Stift an 24 |
| 37 | Kammer für K |

38 Kammer für H
39 Deckel für 37
40 Schließwulst
41 Rast für 40
42 Trichter
43 mittlerer Deckelteil
44 Deckeloberteil
45 Mischer
46 Lochscheibe
47 Schaft von 45
48 Griff von 45
49 Scheide für 48
50 Kolben an 8
51 Durchtrittsöffnung für 8
52 Bund an 6
53 Anschlag für 52
54/55 Eingriff zwischen 33/6 und 1 (Nut/Feder)

**Ansprüche**

1. Druckmittelbetriebene Sprühpistole mit einem Vorratsbehälter (3) für das Sprühmedium, einem Sprühkopf (2) mit einer die Düse (6) der Pistole im wesentlichen konzentrisch umschließenden Verteilerkammer (10) mit Austrittsöffnungen für das Druckmedium, und mit einer Düsennadel (8), an der ein Pistolenabzug (20, 22) zum Öffnen der Düse (6) gegen den Druck einer Schließfeder (18) angreift, die in einem Gehäuseteil (Verschlußkappe 24) am Pistolenkörper (1) gelagert ist, insbesondere zum Aufbringen von erhärtenden fließfähigen Stoffen auf Oberflächen, dadurch gekennzeichnet, daß die Düse (6) mit der Düsennadel (8) und dem Vorratsbehälter (3) sowie einem Düse (8) und Vorratsbehälter (3) verbindenden Steg (33) einen auswechselbaren, in einen Stecksitz (32) am Pistolenkörper (1) einführbaren und in der Arbeitsstellung durch die Verschlußkappe (24) im Stecksitz (32) gesichert gehaltenen Sprühmitteleinsatz (31) bildet.

2. Sprühpistole nach Anspruch 1, dadurch gekennzeichnet, daß die Düse (6) mit ihrem Steg (33) einen fußförmigen Körper (Fuß 33/6) mit Unterseite (Fußsohle) und fersenförmiger Rückseite (Ferse 35) bildet, dem ein pantoffelförmiger Stecksitz (Pantoffelsitz 32) im Pistolenkörper (1) zugeordnet ist.

3. Sprühpistole nach Anspruch 1 oder 2, dadurch gekennzeichnet, daß Düse (6), Vorratsbehälter (3) und der sie verbindende Steg (33) einen einstückigen Körper bilden.

4. Sprühpistole nach Anspruch 2, gekennzeichnet durch einen Eingriff (34/36) zwischen Fuß (33/6) und Verschlußkappe (24) une einen Eingriff (54/55) zwischen Fuß (33/6) und Pistolenkörper (1).

5. Sprühmitteleinsatz für Sprühpistolen nach Anspruch 1, dadurch gekennzeichnet, daß er in seinem Deckel (39) mit einer kleinen Kammer (38) für das vor Gebrauch einzubringende Härtemittel (H) versehen ist.

6. Sprühmitteleinsatz nach Anspruch 5, dadurch gekennzeichnet, daß der Deckel (39) des Vorratsbehälters (3) einen Trichter (42) enthält.

7. Sprühmitteleinsatz nach Anspruch 6, dadurch gekennzeichnet, daß der Trichter (42) als lösbarer Unterteil des Deckels (39) ausgebildet ist.

8. Sprühmitteleinsatz für Sprühpistolen nach Anspruch 1, dadurch gekennzeichnet, daß im Vorratsbehälter (3) ein Mischer (45) mit einer durch Axialschub mischenden Lochscheibe (46) vorgesehen ist, dessen Schaft (47) in der Ruhelage den Verbindungskanal (30) zur Düse (6) verschlossen hält.

9. Sprühmitteleinsatz für Sprühpistolen nach Anspruch 1, dadurch gekennzeichnet, daß die Kammer der Düse (6) nach hinten (außen) durch einen mit der Düsennadel (8) verbundenen Kolben (50) abgedichtet ist, der Art, daß die Düsennadel mit diesem Kolben nach hinten ausziehbar ist.

10. Sprühmitteleinsatz nach Anspruch 9, gekennzeichnet durch einen den Vorratsbehälter (3) zur Düse (6) hin abschließenden Verschluß (Schaft 47, Kolben 50).

11. Sprühmitteleinsatz nach Anspruch 10, dadurch gekennzeichnet, daß der die Düsenkammer gegen die Düsennadel (8) nach außen abdichtende Kolben (50) in der Schließlage der Düse die Düsenkammer gegen den Verbindungskanal (30) zum Vorratsbehäiter (3) abschließt.

**Claims**

1. Compressed fluid spraying pistol operated by a pressure medium including a tank (3) for the spraying medium, a spray head (2) with a distributing chamber (10) surrounding essentially concentricelly the nozzle (6) of the pistol and provided with openings for the output of the pressure medium and further including a jet needle (8) contacted by a pull-off (20, 22) for opening the nozzle (6) against the pressure of a closing spring (18) which is supported within a breech-block (24) at the body (1) of the pistol, especially for applying hardening fluids onto surfaces, characterized by that said nozzle (6) with its jet needle (8) and said tank (3) together with a bridge (33) connecting said nozzle (6) with said tank (3) are forming an exchangeable spray medium inset (31) which is insertable into a seat (32) of the pistol body (1) and is locked by said breech-block (24).

2. Spraying pistol as defined in claim 1, characterized by that said nozzle (6) with its bridge (33) is forming a foot-like body with its underside (sole) and its heal-like backside (heal 35) to which foot is adapted a slipper-like seat (slipper seat 32) within the body (1) of the pistol.

3. Spraying pistol as defined in claim 1 or 2, characterized by that said nozzle (6), tank (3) and connecting bridge (33) are forming a one-piece inset.

4. Spraying pistol as defined in claim 2, characterized by an engagement (34/36) between foot (33/6) and breech-block (24) and another engagement (54/55) between foot (33/6) and pistol body (1).

5. Spray medium inset for a spraying pistol as defined in claim 1 characterized by that said inset within its cover (39) is provided with a small chamber (38) filled with the hardening means for being brought into the spray medium before application.

6. Inset as defined in claim 5, characterized by that the cover of the tank includes a funnel (42).

7. Inset as defined in claim 6, characterized by that said funnel (42) is a detachable lower part of the cover (39).

8. Inset as defined in one of the claims 1 to 7, characterized by a mixer (45) with a perforated disk (46) mixing by axial shift, the shaft (47) of which in its resting position seals the connecting channel (30) to the nozzle (6).

9. Inset as defined in one of the claims 1 to 8, characterized by that the chamber of the nozzle (6) is sealed backwards by a piston (50) connected to the jet needle (8) in such a manner that the needle is extractable backwards together with said piston (50).

10. Spraying pistol as defined in claim 9, characterized by a seal (shaft 47, piston 50) between tank (3) and nozzle (6).

11. Inset as defined in claim 10, characterized by that said piston (50) sealing the nozzle chamber backwards in the rest position of the pistol is closing said nozzle chamber against the connecting channel (30).

**Revendications**

1. Pistolet de pulvérisation fonctionnant avec un agent de pression, avec un réservoir pour l'agent à pulvériser, une tête de pulvérisation (2) comportant une chambre de répartition (10) entourant essentiellement concentriquement l'ajutage de pulvérisation (6) du pistolet avec des ouvertures d'échappement pour l'agent de pression ainsi qu'une aiguille d'ajutage (8) sur laquelle a agi une gâchette (20, 22) pour ouvrir l'ajutage (6) contre la pression d'un ressort de fermeture (18), qui se trouve monté dans une partie de carter (boîtier de fermeture 24) sur le corps (1) du pistolet, en particulier pour projeter sur des surfaces de matières fluides durcissables, caractérisé par le fait que l'ajutage (6) avec l'aiguille d'ajutage (8) et le réservoir (3) ainsi qu'un pied (33) reliant l'ajutage et le réservoir (3) constituent une unité de pulvérisation (31) de l'agent à pulvériser interchangeable, susceptible d'être engagée dans un siège (32) sur le corps du pistolet (1) et qui, en position de travail, est maintenue sur le siège (32) à l'aide du boîtier de fermeture (24).

2. Pistolet de pulvérisation selon la revendication 1, caractérisé par le fait que l'ajutage (6) avec son pied (33) constituent un corps en forme de pied (pied 33/6) avec une face inférieure (semelle du pied) et un côté arrière en forme de talon (talon 35) auquel correspond un siège en forme de pantoufle (siège en pantoufle 32) sur le corps (1) du pistolet.

3. Pistolet de pulvérisation selon la revendication 1 ou 2, caractérisé par le fait que l'ajutage (6) et le réservoir (3) et le pied (33) qui les relie constituent une seule pièce.

4. Pistolet de pulvérisation selon la revendication 2, caractérisé par le fait qu'il comporte un engagement (34/36) entre le pied (33/6) et le boîtier de fermeture (24) et un engagement (54/55) entre le pied (33/6) et le corps (1) du pistolet.

5. Réservoir d'agent à pulvériser pour pistolet de pulvérisation selon la revendication 1, caractérisé par le fait qu'il est pourvu dans son couvercle (39) d'une petite chambre (38) pour l'agent durcisseur (H) qui doit être amené avant l'utilisation.

6. Réservoir d'agent à pulvériser selon la revendication 5, caractérisé par le fait que le couvercle (39) du réservoir (3) comporte un entonnoir (42).

7. Réservoir d'agent à pulvériser selon la revendication 6, caractérisé par le fait que l'entonnoir (42) est constitué par la partie inférieure détachable du couvercle (39).

8. Réservoir d'agent de pulvérisation pour le pistolet de pulvérisation selon la revendication 1, caractérisé par le fait qu'il est prévu dans le réservoir (3) un mélangeur (45) avec un disque perforé (46) pour réaliser le mélange par déplacement axial, dont la tige (47) maintient fermé en position de repos le canal de liaison (30) vers l'ajutage (6).

9. Réservoir d'agent à pulvériser pour pistolet de pulvérisation selon la revendication 1, caractérisé par le fait que l'aiguille d'ajutage (8) pouvant être retirer vers l'extérieur lors de la mise en service est doté d'un piston (50), qui vers l'extérieur obture la chambre de l'ajutage (6).

10. Réservoir d'agent à pulvériser selon la revendication 9, caractérisé par le fait qu'il est pourvu d'une fermeture (tige 47, piston 50) vers l'ajutage (6).

11. Réservoir d'agent à pulvériser selon la revendication 10, caractérisé par le fait que le piston (50) maintient fermé en position de repos le canal de liaison (30) vers l'ajutage (6).

# 0 058 668

FIG.1

FIG.7

FIG.3

FIG.6

FIG.4

FIG.5

FIG.2

FIG.8